# FASCICULE DE BREVET EUROPEEN

(11) **EP 3 387 474 B1**
(45) Date de publication et mention de la délivrance du brevet: **18.03.2020**
(21) Numéro de dépôt: 16806100.0
(22) Date de dépôt: 06.12.2016
(51) Int. Cl.: G02B 6/44

(54) **CÂBLE OPTIQUE À ÉLÉMENT DE RENFORT MÉCANIQUE**
OPTISCHES KABEL MIT EINEM MECHANISCHEN VERSTÄRKUNGSELEMENT
OPTICAL CABLE COMPRISING A MECHANICAL REINFORCING ELEMENT

(30) Priorité: 07.12.2015 FR 1561910
(43) Date de publication de la demande: 17.10.2018
(73) Titulaire: ACOME, 75014 Paris (FR)
(72) Inventeur: JAMMES, Olivier, 50140 Notre Dame Du Touchet (FR)
(74) Mandataire: Regimbeau
(86) Numéro de dépôt international: PCT/EP2016/079853
(87) Numéro de publication internationale: WO 2017/097743

(56) Documents cités:
- EP-A1- 2 196 834
- WO-A1-2009/110177
- US-A- 4 389 087

## Description

### DOMAINE DE L'INVENTION

Le domaine auquel appartient la présente invention est celui des câbles optiques de télécommunication et notamment des câbles aériens.

Celle-ci a pour objets un câble à élément de renfort mécanique et un procédé pour sa fabrication.

### ARRIERE PLAN TECHNOLOGIQUE DE L'INVENTION

On connait par le document EP 0 373 846 de la société ATT, l'utilisation de porteurs (également appelés renforts) rigides et flexibles qui interviennent dans la fabrication de câbles optiques entièrement diélectriques. Ces porteurs, de forme cylindrique, sont agencés en deux groupes diamétralement opposés. Les porteurs sont au nombre de trois par groupes. Dans un mode de réalisation, deux sont flexibles et le troisième est rigide.

Les renforts rigides assurent une bonne résistance à la traction et à la compression, tandis que les renforts souples autorisent une flexion préférée du câble lors de courbures engendrées par son installation.

Cependant, du fait de la présence d'une cavité centrale contenant les fibres optiques autour de laquelle sont positionnés les groupes de renforts, ces câbles sont relativement encombrants et présentent une direction préférentielle de courbure due à la position de ces renforts.

Par ailleurs, le présent demandeur commercialise des câbles de télécommunication dénommés "Unitube" qui sont renforcés d'une part par des renforts souples, disposés dans la cavité qui accueille les modules optiques et, d'autre part, par deux renforts rigides de type "FRP" (pour "Fiber Reinforced Plastic") noyés dans la gaine finale et diamétralement opposés.

Là aussi, les renforts rigides noyés dans la gaine génèrent un rayon de courbure préférentiel du câble et une forte épaisseur radiale de la gaine finale (diamètre du renfort rigide + épaisseurs radiales de la gaine de chaque côté de ce renfort), ce qui occasionne un diamètre de câble final important.

Un état de la technique supplémentaire peut être illustré par le WO-A-2009/110177 qui divulgue la présence d'éléments de renfort mécaniques monodirectionnels au sein d'un câble, et par US-A-4 389 087 qui se rapporte non pas à un câble mais à une fibre.

Partant de cet état de la technique et plus particulièrement des inconvénients que présentent les câbles existants, le but de la présente invention est de proposer un câble compact ayant un rayon de courbure préférentiel limité et pouvant être dévidé (soit à partir d'une bobine ou d'une couronne) au choix soit "à la déroulée" soit "à la défilée", tout en répondant aux contraintes imposées dans les cahiers des charges (contraintes mécaniques, climatiques, optiques).

Par l'expression " pouvant être dévidé au choix soit "à la déroulée" soit "à la défilée"", on entend respectivement que le câble est dévidé selon son axe longitudinal (pas de création d'une torsion du câble) ou perpendiculairement à son axe longitudinal (création d'une torsion à chaque tour dévidé).

### RESUME DE L'INVENTION

Ainsi, la présente invention a principalement pour objet un câble optique qui comprend :
- un cœur optique constitué d'au moins une fibre optique, protégée ou non par une gaine de protection ;
- autour de ce cœur optique, une gaine dite "gaine extérieure" ;
- au moins un élément de renfort mécanique qui présente une épaisseur inférieure à sa largeur et qui est disposé entre le cœur optique et la gaine extérieure;
caractérisé par le fait que :
- ledit au moins un élément de renfort mécanique présente une étendue angulaire inférieure à 360°, préférentiellement inférieure à 180° ;
- ledit au moins un élément de renfort mécanique est disposé selon une configuration en arc de cercle dont la concavité est dirigée vers ledit cœur optique ;
- ledit au moins un élément de renfort mécanique est solidaire du milieu environnant, mais est simplement en contact avec ledit cœur optique quand il touche celui-ci.

Par ailleurs, selon d'autres caractéristiques non limitatives et avantageuses de l'invention de ce câble :
- ledit élément de renfort est unique ;
- il comprend plusieurs éléments de renfort mécanique ;
- lesdits éléments de renfort sont juxtaposés, sont contigus, ou se chevauchent partiellement ;
- il comporte, entre lesdits cœur optique et gaine extérieure, un renfort souple au sein duquel ledit au moins un renfort mécanique est présent ;
- ledit au moins un élément de renfort présente l'une des caractéristiques suivantes :
- il est en contact avec ledit cœur optique ;
- il est en contact avec ladite gaine extérieure ;
- Il est en contact avec le dit renfort souple ;
- il est présent uniquement dans ledit renfort souple, c'est à dire sans contact avec l'un ou l'autre desdits cœur optique et gaine extérieure ;
- Le dit au moins élément de renfort est constitué de fibres naturelles ou synthétiques ou de polymères thermoplastiques ou thermodurcissables utilisés ensemble ou séparément.

La présente invention se rapporte également à un procédé de fabrication d'un tel câble. Celui-ci se caractérise par le fait qu'il comprend la mise en œuvre des étapes suivantes :
A) dévidage dudit cœur optique ;
B) dévidage de l'au moins un élément de renfort ;
C) dévidage des renforts souples et des filins de déchirement, quand ils sont présents ;
D) traitement dudit au moins un élément de renfort pour le rendre solidaire du milieu environnant ;
E) guidage des différents composants du câble pour organiser la structure finale ;
F) gainage de l'ensemble de ces composants ;
G) refroidissement du câble.

### BREVE DESCRIPTION DES DESSINS

D'autres caractéristiques et avantages de l'invention apparaîtront à la lecture de la description suivante d'un mode de réalisation préféré de l'invention. Cette description est faite en référence aux dessins annexés dans lesquels :
- la figure 1 est une vue en coupe transversale d'un premier mode de réalisation du câble conforme à l'invention ;
- les figures 2 à 4 sont des vues analogues à la figure 1 de trois autres formes de réalisation du câble selon l'invention ;
- la figure 5 est constituée de schémas qui montrent trois agencements possibles des éléments de renfort mécanique qui peuvent être présents dans le câble, étant précisé qu'il s'agit ici d'illustrer simplement leurs agencements et non pas leur forme ;
- la figure 6 est encore une vue en coupe transversale d'un mode de réalisation du câble pour laquelle une protection n'est pas revendiquée ;
- la figure 7 est un schéma destiné à illustrer un mode de fabrication possible dudit câble.

### DESCRIPTION DETAILLEE DE L'INVENTION

Le principe du câble selon l'invention réside notamment dans le positionnement asymétrique d'au moins un élément de renfort mécanique dans la structure du câble. Cet au moins un élément de renfort est tel qu'il présente une surface de contact qui est solidaire du milieu environnant de la structure du câble (gaine ou éléments de renfort), mais est simplement en contact (sans être solidaire) du cœur optique quand il touche celui-ci.

Cet au moins un élément de renfort se présente préférentiellement sous forme d'un ruban, même si l'on peut l'assimiler à un fil lorsque son étendue angulaire est très réduite. En tout état de cause, cet élément de renfort présente une épaisseur inférieure à sa largeur, de sorte qu'il a une forme aplatie.

Cet élément de renfort mécanique diélectrique (et donc non métallique), que l'on peut également qualifier de "renfort de compression" est un produit capable de donner la résistance à la compression de la structure finale du câble attendue, étant donné qu'il possède des propriétés mécaniques capables de limiter le retrait des autres éléments individuels qui sont constitutifs de la structure du câble.

Il s'agit par exemple d'un produit semi-rigide à base de fibres synthétiques ou naturelles noyées dans une matrice thermodurcissable ou thermoplastique (par exemple des filaments de verre de renforcement et des filaments thermoplastiques de type polyoléfine (polypropylène, polyéthylène) ou polyester (polytéréphtalate d'éthylène, polytéréphtalate de butylène), ou encore de rubans à base de fibres naturelles comme le lin, tels que les rubans décrits dans la demande de brevet FR 3 003 795, ou de renforts de type thermoplastique, ou de fibres synthétiques ou naturelles.

Dans le cas où l'élément de renfort mécanique est à base de fibres, on préférera que les fibres soient monodirectionnelles et s'étendent selon la plus grande dimension de l'élément.

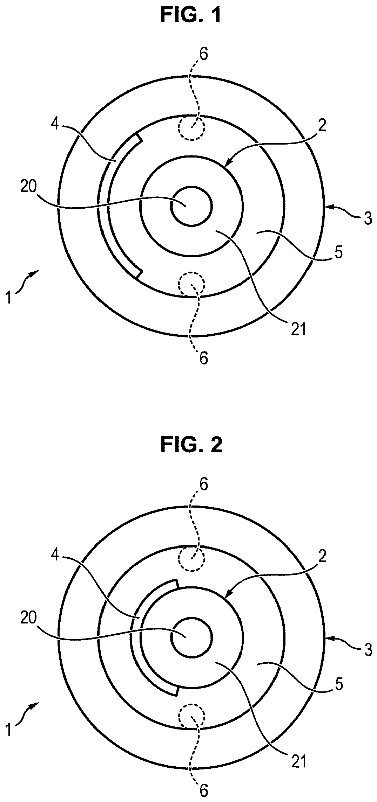

En se reportant maintenant à la figure 1, on constate que dans cette première forme de réalisation d'un câble optique 1 selon l'invention, le câble est cylindrique, et comprend un cœur optique 2 qui s'étend selon l'axe longitudinal du câble.

Ce cœur est constitué ici d'une seule fibre optique 20 qui est elle-même entourée d'une gaine de protection 21.

Ce cœur optique peut être de type "ISS 900", c'est-à-dire une fibre optique isolée avec une gaine semi-serrée de 900 µm.

Cependant, dans des modes de réalisation alternatifs qui n'apparaissent pas sur les figures annexées, le cœur optique pourrait comporter une ou plusieurs fibres optiques protégées ou non par une gaine de protection 21.

Ce cœur optique 2 est noyé dans une masse de renfort souple 5 composées d'une multitude de fibres longues mono-orientées synthétiques et/ou naturelles. Cette masse de renforts souples peut être constituée par exemple de mèches d'aramide.

Par le qualificatif "souple", on entend la capacité que la masse de renfort a à se déformer, sous l'effet d'une sollicitation.

On notera que cette masse de renfort souple 5 a une forme cylindrique annulaire de même axe que le cœur optique.

Répartis en périphérie de la masse 5 et diamétralement opposés sont prévus deux filins de déchirement 6 de structure connue, qui sont réalisés par exemple en polyester. Ainsi que leur nom l'indique, ces filins, qui sont accessibles par les extrémités opposées du câble, ont pour fonction de permettre d'accéder au cœur optique 2, sans nécessiter l'utilisation d'un outil quelconque.

Leur présence, bien que souhaitée, n'est pas indispensable.

L'ensemble qui vient d'être décrit est confiné dans une gaine extérieure 3, par exemple en polymère thermoplastique extrudé. Ainsi, cette gaine peut être en polyéthylène.

Conformément à l'invention, un élément de renfort mécanique 4, est disposé entre la gaine extérieure 3 et la masse de renfort souple 5 et est solidaire de la partie interne de la gaine 3. Par la terminologie "est solidaire", on entend que l'élément de renfort est collé ou adhère au milieu environnant. Ce collage et ou cette adhérence peuvent résulter de la fusion au moins partielle du milieu environnant et ou du renfort, à la suite de quoi, l'élément de renfort se trouve fixé à ou est rendu solidaire du milieu environnant.

Dans ce mode de réalisation :
Quelle que soit la nature de l'élément de renfort 4, il est collé sur la partie interne de la gaine 3 ou adhère à celle-ci, afin d'assurer prioritairement le module de compression du câble.

Quelle que soit la nature de la masse de renfort souple 5, elle est disposée en périphérie du cœur optique et assure un module de traction complémentaire au module de traction de l'élément de renfort 4.

Quelle que soit la nature des filins de déchirement 6, ils sont disposés en "sandwich" entre la masse de renfort souple 5 et la gaine extérieure 3, ce qui permet une ouverture aisée de cette gaine 3 afin d'accéder facilement au cœur optique 2.

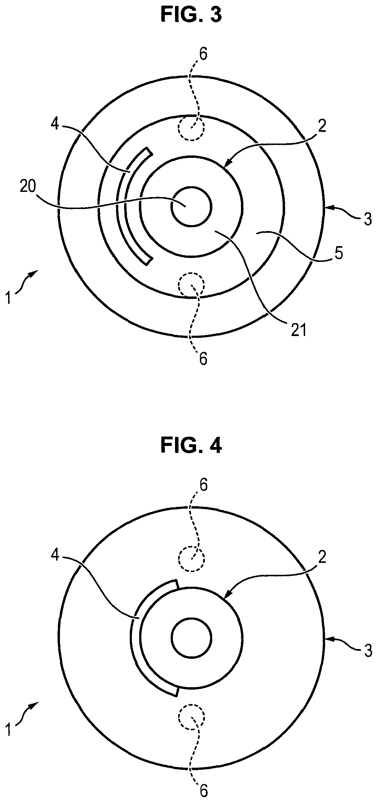

Les modes de réalisation des figures 2 et 3 reprennent sensiblement la physionomie générale de l'exemple de la figure 1.

Toutefois, en se référant à la figure 2, on note que l'élément de renfort 4 s'étend contre le cœur optique 2.

Dans la variante de la figure 3, l'élément de renfort 4 est "noyé" au sein de la masse de renfort souple 5 et se situe à mi- épaisseur de celle-ci.

Enfin, dans le mode de réalisation de la figure 4, on note que la masse de renfort souple 5 est absente.

Conformément aux 4 modes de réalisation qui viennent d'être décrits, l'élément de renfort a sensiblement une étendue angulaire de l'ordre de 120°.

Ceci n'est qu'une valeur exemplative. Une des particularités de ce renfort est d'avoir un caractère asymétrique, c'est à dire que ces bords longitudinaux ne se touchent pas. En d'autres termes, il existe un secteur angulaire au sein duquel le renfort n'est pas présent.

Dans les modes de réalisation qui viennent d'être décrits, on avait affaire à un élément de renfort unique et monobloc.

Cependant, dans certaines variantes, on peut faire usage de plusieurs éléments de renfort.

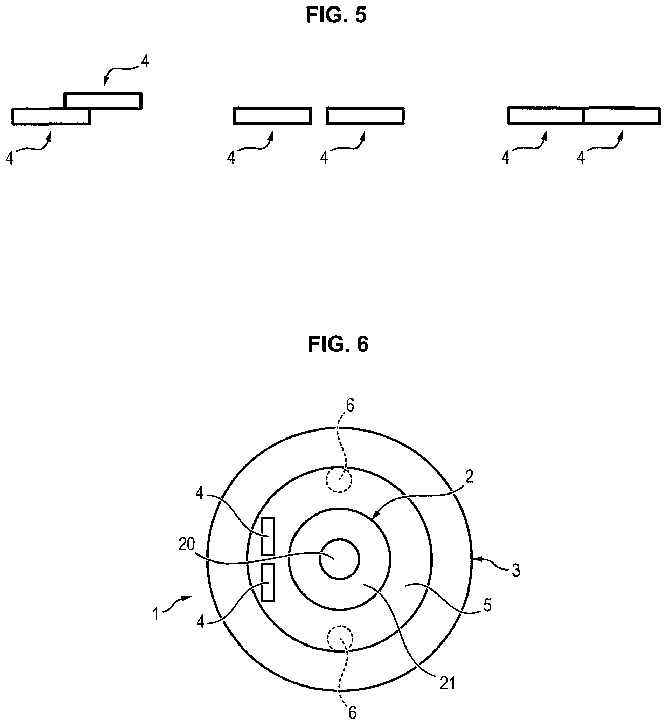

A la figure 5 sont montrées plusieurs dispositions possibles de ces éléments de renfort 4, étant entendu qu'en réalité, ces éléments ont une forme en arc-de-cercle.

Ainsi, de gauche à droite, on a affaire à des éléments 4 qui se chevauchent partiellement, qui sont juxtaposés et qui sont contigus. Ici, seul deux éléments sont visibles. Ils peuvent toutefois être plus nombreux.

Ces éléments multiples 4 sont configurés en arc de cercle dont la concavité est dirigée vers ledit cœur optique, de sorte que ce sont les bords longitudinaux extérieurs de ces éléments qui définissent l'étendue angulaire totale occupée par ces éléments.

Toutefois, comme illustré à la figure 6, où la structure du câble est similaire à celle de la figure 3, deux éléments de renfort 4 sont juxtaposés. En pratique, ces éléments sont conformés en arc-de-cercle. Là encore, l'étendue angulaire qu'ils occupent est de l'ordre de 120°.

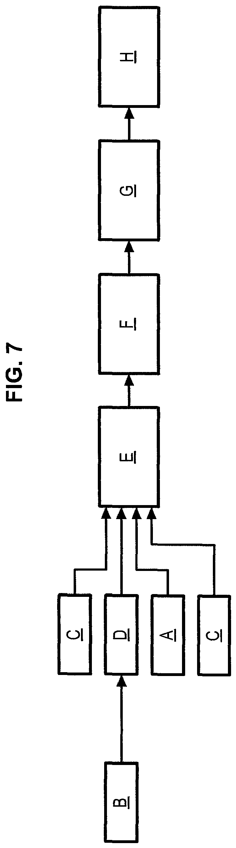

A la figure 7 est représentée schématiquement la mise en oeuvre de la fabrication d'un câble conforme à l'invention.

Ainsi, au poste A a lieu le dévidage du cœur optique 2.

Au poste B, on procède au dévidage de l'élément de renfort 4.

Au poste C, on réalise le dévidage des renforts souples 5 et des filins de déchirement 6, quand ils sont présents.

En fonction de la cohésion souhaitée du renfort 4 avec le milieu environnant (collage et/ou adhérence), ce renfort 4 pourra subir différents traitements (thermiques, chimiques, mécaniques....) avant ou pendant sa mise en œuvre, ce qui peut être figuré par le poste D.

Enfin, aux postes E, F, G sont réalisées les opérations suivantes :
E : Guidage précis des différents composants afin d'organiser la structure du câble avant la pose de la gaine finale.
F : Gainage de l'ensemble des éléments du câble avec le matériau choisi.
G : Refroidissement du câble afin de figer la structure et le dimensionnel du câble.
H : Conditionnement du câble sur le support choisi.

Parmi les avantages liés à la structure du câble qui fait l'objet de la présente demande, on notera particulièrement les points suivants :

Ce câble diélectrique se dévide à la défilée tout en présentant le module de compression nécessaire.

Il présente de plus un petit dimensionnel. Par exemple, pour un câble ayant les mêmes performances mécaniques (modules de compression et traction....), le mode de réalisation 1 présente un diamètre extérieur de 4mm alors que le câble « Unitube » décrit plus haut présente un diamètre extérieur de 6mm. De plus, cette structure présente un rayon de courbure préférentiel limité contrairement à ce câble de l'art antérieur.

## Revendications

1. Câble optique (1) qui comprend :
- un cœur optique (2) constitué d'au moins une fibre optique (20), protégée ou non par une gaine de protection (21) ;
- autour de ce cœur optique (2), une gaine dite "gaine extérieure" (3) ;
- au moins un élément de renfort mécanique (4) qui présente une épaisseur inférieure à sa largeur et qui est disposé, entre le cœur optique (2) et la gaine extérieure (3) ;
**caractérisé par le fait que** :
- ledit au moins un élément de renfort mécanique (4) présente une étendue angulaire inférieure à 360°, préférentiellement inférieure à 180° ;
- ledit au moins un élément de renfort mécanique (4) est disposé selon une configuration en arc de cercle dont la concavité est dirigée vers ledit cœur optique ;
- ledit au moins un élément de renfort mécanique (4) est solidaire du milieu environnant, mais est simplement en contact avec ledit cœur optique (2) quand il touche celui-ci.

2. Câble optique (1) selon la revendication 1, **caractérisé par le fait que** ledit élément de renfort (4) est unique.

3. Câble optique (1) selon la revendication 1, **caractérisé par le fait qu'**il comprend plusieurs éléments de renfort mécanique (4).

4. Câble optique (1) selon la revendication 3, **caractérisé par le fait que** lesdits éléments de renfort (4) sont juxtaposés, sont contigus, ou se chevauchent partiellement.

5. Câble optique (1) selon l'une des revendications 1 à 4, **caractérisé par le fait qu'**il comporte, entre lesdits cœur optique (2) et gaine extérieure (3), un renfort souple (5) au sein duquel ledit au moins un renfort mécanique (4) est présent.

6. Câble optique (1) selon la revendication 5, **caractérisé par le fait que** ledit au moins un élément de renfort (4) présente l'une des caractéristiques suivantes :
- il est en contact avec ledit cœur optique (2) ;
- il est en contact avec ladite gaine extérieure (3) ;
- Il est en contact avec le dit renfort souple (5),
- il est présent uniquement dans ledit renfort souple (5), c'est à dire sans contact avec l'un ou l'autre desdits cœur optique (2) et gaine extérieure (3).

7. Câble optique (1) selon l'une des revendications précédentes, **caractérisé par le fait que** ledit au moins un élément de renfort (4) est constitué de fibres naturelles ou synthétiques ou de polymères thermoplastiques ou thermodurcissables utilisés ensemble ou séparément.

8. Procédé de fabrication d'un câble optique (1) selon l'une des revendications précédentes, **caractérisé par le fait qu'**il comprend la mise en oeuvre des étapes suivantes :
A) dévidage dudit cœur optique (2) ;
B) dévidage de l'au moins un élément de renfort (4) ;
C) dévidage des renforts souples (5) et des filins de déchirement, quand ils sont présents ;
D) traitement dudit au moins un élément de renfort (4) pour le rendre solidaire du milieu environnant ;
E) guidage des différents composants du câble (1) pour organiser la structure finale;
F) gainage de l'ensemble de ces composants ;
G) refroidissement du câble.

## Patentansprüche

1. Optisches Kabel (1), das umfasst:
- einen optischen Kern (2), der aus mindestens einer optischen Faser (20) besteht, die von einem Schutzmantel (21) geschützt ist oder nicht;
- um diesen optischen Kern (2) einen Mantel, bezeichnet als "äußerer Mantel" (3);
- mindestens ein mechanisches Verstärkungselement (4), das eine Stärke aufweist, die geringer als seine Breite ist und das zwischen dem optischen Kern (2) und dem äußeren Mantel (3) angeordnet ist;
**dadurch gekennzeichnet, dass**:
- das mindestens eine mechanische Verstärkungselement (4) eine Winkelausdehnung unter 360°, vorzugsweise unter 180° aufweist;
- das mindestens eine mechanische Verstärkungselement (4) gemäß einer Kreisbogenkonfiguration angeordnet ist, deren Konkavität zum optischen Kern gerichtet ist;
- das mindestens eine mechanische Verstärkungselement (4) mit dem umgebenden Milieu fest verbunden ist, aber mit dem optischen Kern (2) einfach im Kontakt ist, wenn es diesen berührt.

2. Optisches Kabel (1) nach Anspruch 1, **dadurch gekennzeichnet, dass** das Verstärkungselement (4) einmalig ist.

3. Optisches Kabel (1) nach Anspruch 1, **dadurch gekennzeichnet, dass** es mehrere mechanische Verstärkungselemente (4) umfasst.

4. Optisches Kabel (1) nach Anspruch 3, **dadurch gekennzeichnet, dass** die Verstärkungselemente (4) nebeneinanderliegen, aneinanderliegen oder sich teilweise überlappen.

5. Optisches Kabel (1) nach einem der Ansprüche 1 bis 4, **dadurch gekennzeichnet, dass** es zwischen dem optischen Kern (2) und dem äußeren Mantel (3) eine elastische Verstärkung (5) aufweist, in welcher die mindestens eine mechanische Verstärkung (4) vorhanden ist.

6. Optisches Kabel (1) nach Anspruch 5, **dadurch gekennzeichnet, dass** das mindestens eine Verstärkungselement (4) eines der folgenden Merkmale aufweist:
- es ist mit dem optischen Kern (2) im Kontakt;
- es ist mit dem äußeren Mantel (3) im Kontakt;
- es ist mit der elastischen Verstärkung (5) im Kontakt,
- es ist nur in der elastischen Verstärkung (5) vorhanden, d. h. ohne Kontakt mit entweder dem optischen Kern (2) und dem äußeren Mantel (3).

7. Optisches Kabel (1) nach einem der vorangehenden Ansprüche, **dadurch gekennzeichnet, dass** das mindestens eine Verstärkungselement (4) aus natürlichen oder synthetischen Fasern oder aus thermoplastischen oder thermisch härtbaren Polymeren besteht, die gemeinsam oder getrennt verwendet werden.

8. Verfahren zur Herstellung eines optischen Kabels (1) nach einem der vorangehenden Ansprüche, **dadurch gekennzeichnet, dass** es die Durchführung der folgenden Schritte umfasst:
A) Abwickeln des optischen Kerns (2);
B) Abwickeln des mindestens einen Verstärkungselements (4);
C) Abwickeln der elastischen Verstärkungen (5) und der Reißleinen, sofern vorhanden;
D) Behandeln des mindestens einen Verstärkungselements (4), um es mit dem umgebenden Milieu fest zu verbinden;
E) Führen der verschiedenen Komponenten des Kabels (1), um die abschließende Struktur zu organisieren;
F) Ummanteln der Gesamtheit dieser Komponenten;
G) Kühlen des Kabels.

## Claims

1. An optical cable (1) which comprises:
- an optical core (2) consisting of at least one optical fiber (20), protected or unprotected by a protective sheath (21);
- around this optical core (2), a sheath called "external sheath" (3);
- at least one mechanical reinforcing element (4) which has a thickness smaller than its width and which is disposed between the optical core (2) and the external sheath (3);
**characterized by** the fact that:
- said at least one mechanical reinforcing element (4) has an angular extent less than 360°, preferably less than 180°;
- said at least one mechanical reinforcing element (4) is disposed according to a circular arc configuration whose concavity is directed towards said optical core;
- said at least one mechanical reinforcing element (4) is secured to the surrounding medium, but is simply in contact with said optical core (2) when it touches it.

2. The optical cable (1) according to claim 1, **characterized by** the fact that said reinforcing element (4) is unique.

3. The optical cable (1) according to claim 1, **characterized by** the fact that it comprises several mechanical reinforcing elements (4).

4. The optical cable (1) according to claim 3, **characterized by** the fact that said reinforcing elements (4) are juxtaposed, are contiguous, or are partially overlapping each other.

5. The optical cable (1) according to any of claims 1 to 4, **characterized by** the fact that it includes, between said optical core (2) and external sheath (3), a flexible reinforcement (5) within which said at least one mechanical reinforcement (4) is present.

6. The optical cable (1) according to claim 5, **characterized by** the fact that said at least one reinforcing element (4) has one of the following characteristics:
- it is in contact with said optical core (2);
- it is in contact with said external sheath (3);
- it is in contact with said flexible reinforcement (5),
- it is present only in said flexible reinforcement (5), that is to say without contact with either of said optical core (2) and external sheath (3).

7. The optical cable (1) according to any of the preceding claims, **characterized by** the fact that said at least one reinforcing element (4) consists of natural or synthetic fibers or of thermoplastic or thermosetting polymers used together or separately.

8. A method for manufacturing an optical cable (1) according to any of the preceding claims, **characterized by** the fact that it comprises the implementation of the following steps:
A) unwinding said optical core (2);
B) unwinding the at least one reinforcing element (4) ;
C) unwinding the flexible reinforcements (5) and the rip cords, when they are present;
D) treating said at least one reinforcing element (4) to make it secured to the surrounding medium;
E) guiding the different components of the cable (1) to organize the final structure;
F) sheathing all of these components;
G) cooling the cable.
